# EUROPEAN PATENT SPECIFICATION

(11) **EP 3 084 799 B1**
(45) Date of publication and mention of the grant of the patent: **20.12.2017**
(21) Application number: 14800218.1
(22) Date of filing: 05.11.2014
(51) Int. Cl.: H01H 83/20

(54) **ELECTRICAL SWITCHING APPARATUS INCLUDING ALTERNATING CURRENT ELECTRONIC TRIP CIRCUIT WITH ARC FAULT DETECTION CIRCUIT**
ELEKTRISCHE SCHALTVORRICHTUNG MIT ELEKTRONISCHER WECHSELSTROMAUSLÖSESCHALTUNG MIT LICHTBOGENFEHLERDETEKTORSCHALTUNG
APPAREIL DE COMMUTATION ÉLECTRIQUE COMPRENANT UN CIRCUIT DE DÉCLENCHEMENT ÉLECTRONIQUE EN COURANT ALTERNATIF À CIRCUIT DE DÉTECTION DE DÉFAUT D'ARC

(30) Priority: 18.12.2013 US 201314132678
(43) Date of publication of application: 26.10.2016
(73) Proprietor: Eaton Corporation, Cleveland, OH 44122 (US)
(72) Inventor: ZHOU, Xin, Wexford, Pennsylvania 15090 (US); MUELLER, Robert W., Aliquippa, Pennsylvania 15001 (US); ROHN, David R., Venetia, Pennsylvania 15367 (US)
(74) Representative: Emde, Eric
(86) International application number: PCT/US2014/063972
(87) International publication number: WO 2015/094497

(56) References cited:
- EP-A2- 2 461 345
- WO-A1-99/43065
- WO-A1-2007/129213

## Description

### CROSS-REFERENCE TO RELATED APPLICATIONS

This application claims priority from and claims the benefit of U.S. Patent Application Serial No. 14/132,678, filed December 18, 2013. This application is related to commonly assigned, copending U.S. Patent Application Serial No. 14/132,705, filed December 18, 2013, entitled "Electrical Switching Apparatus Including Alternating Current Electronic Trip Circuit With Arc Fault Detection Circuit And Power Supply".

### BACKGROUND

### Field

The disclosed concept pertains generally to electrical switching apparatus and, more particularly, to circuit breakers including a plurality of separable contacts.

### Background Information

Circuit breakers have been used in alternating current (AC) applications and direct current (DC) applications. The applications for DC circuit breakers have been very small. With the larger use of alternative energy sources, such as photovoltaic applications, the DC applications are increasing. DC molded case circuit breakers have used mechanical thermal and magnetic trip units for overload and short circuit protection, while some DC air circuit breakers employ electronic trip units. Magnetic trip units instantaneously trip the circuit breaker when the current in the protected circuit exceeds a predetermined level. However, magnetic trip units are difficult to calibrate and are not as accurate as electronic trip units. Thermal trip units are less susceptible to nuisance tripping, but take a longer amount of time to trip the circuit breaker, and are susceptible to ambient thermal conditions causing accuracy problems. Because of these problems thermal and magnetic trip units are not typically used in the larger size and higher current rated circuit breakers in AC applications, but rather, AC electronic trip units, which use a current transformer to sense the AC current, are used.

Without a time varying magnetic field, the AC current transformer will produce no electromotive force with DC current, which makes the AC electronic trip unit inoperable in DC applications. Certain DC circuit breakers such as DC air circuit breakers have used a DC electronic trip unit in combination with a shunt to sense the DC current in the protected circuit. The DC electronic trip unit provides enhanced control and tripping accuracy of the circuit breaker over thermal and magnetic trip units. However, DC circuit breakers which include a DC electronic trip unit are costly as compared to the high volume and readily available AC electronic trip units.

Photovoltaic applications present difficulties for current DC circuit breakers. In photovoltaic applications, the short circuit current level can be relatively low (e.g., less than 200% of the rated current and usually about 125% to 135% of the rated current). Due to the relatively low short circuit current level, DC circuit breakers which use thermal and magnetic trip units are typically not desirable because it is difficult to set the magnetic trip unit precisely at these low levels and could cause excessive nuisance tripping and the thermal trip unit may not offer adequate protection due to the long time it takes to trip the circuit breaker. Additionally, thermal and magnetic trip units do not provide protection from arc faults. While a DC circuit breaker which uses a DC electronic trip unit can offer suitable circuit protection in photovoltaic applications, the cost of the DC circuit breaker with a DC electronic trip unit is a concern.

There is room for improvement in electrical switching apparatus, such as circuit breakers.

Document EP2461345 discloses a device according to the preamble of claim 1.

### SUMMARY

These needs and others are met by embodiments of the disclosed concept in which an electrical switching apparatus having an electronic trip circuit includes a transductor circuit, a current sensor, and an alternating current electronic trip circuit including an arc fault detection circuit.

In accordance with one aspect of the disclosed concept, an electrical switching apparatus comprises: a plurality of first terminals including two input terminals structured to electrically connect to a direct current power source, a plurality of second terminals including two output terminals structured to electrically connect to a direct current load; a plurality of pairs of separable contacts; an operating mechanism configured to open and close said separable contacts; a trip actuator configured to cooperate with said operating mechanism to trip open said separable contacts; a plurality of conductors that electrically connect each pair of separable contacts between one of said first terminals and one of said second terminals; a transductor circuit including first and second current transformers, the transductor circuit being configured to sense a direct current component of a current flowing between at least one of the input terminals and at least one of the output terminals and to output an alternating current proportional to the direct current component: a current sensor configured to sense an alternating current component of the current flowing between at least one of the input terminals and at least one of the output terminals; and an alternating current electronic trip circuit including an arc fault detection circuit configured to detect an arc fault based on the sensed alternating current component, the alternating current electronic trip circuit being configured to control said trip actuator based on the alternating current output from the transductor circuit or the detected arc fault.

### BRIEF DESCRIPTION OF THE DRAWINGS

A full understanding of the disclosed concept can be gained from the following description of the preferred embodiments when read in conjunction with the accompanying drawings in which:
Figure 1 is a circuit diagram in partial block form of an electrical switching apparatus electrically connected to an ungrounded load in accordance with an embodiment of the disclosed concept;
Figure 2 is a circuit diagram in partial block form of an electrical switching apparatus electrically connected to a grounded load in accordance with another embodiment of the disclosed concept;
Figures 3 and 4 are schematic diagrams of different configurations of electrical switching apparatus in accordance with embodiments of the disclosed concept;
Figure 5 is a circuit diagram in partial block form of an output interlace circuit in accordance with embodiments of the disclosed concept;
Figures 6 and 7 are circuit diagrams of electrical switching apparatus with alternating current excitation voltage sources in accordance with other embodiments of the disclosed concept; and
Figure 8 is a circuit diagram in partial block form of an electrical switching apparatus in accordance with another embodiment of the disclosed concept.

### DESCRIPTION OF THE PREFERRED EMBODIMENTS

As employed herein, the term "number" shall mean one or an integer greater than one (i.e., a plurality).

As employed herein, the term "electrical conductor" shall mean a wire (e.g., without limitation, solid: stranded; insulated; non-insulated), a copper conductor, an aluminum conductor, a suitable metal conductor, or other suitable material or object that permits an electric current to flow easily.

As employed herein, the statement that two or more parts are "connected" or "coupled" together shall mean that the parts are joined together either directly or joined through one or more intermediate parts. Further, as employed herein, the statement that two or more parts are "attached" shall mean that the parts are joined together directly.

As employed herein, the term "processor" shall mean a programmable analog and/or digital device that can store, retrieve, and process data: a computer: a workstation, a personal computer; a controller, a digital signal processor: a microprocessor; a microcontroller; a microcomputer: a central processing unit; a mainframe computer; a mini-computer; a server; a networked processor; or any suitable processing device or apparatus.

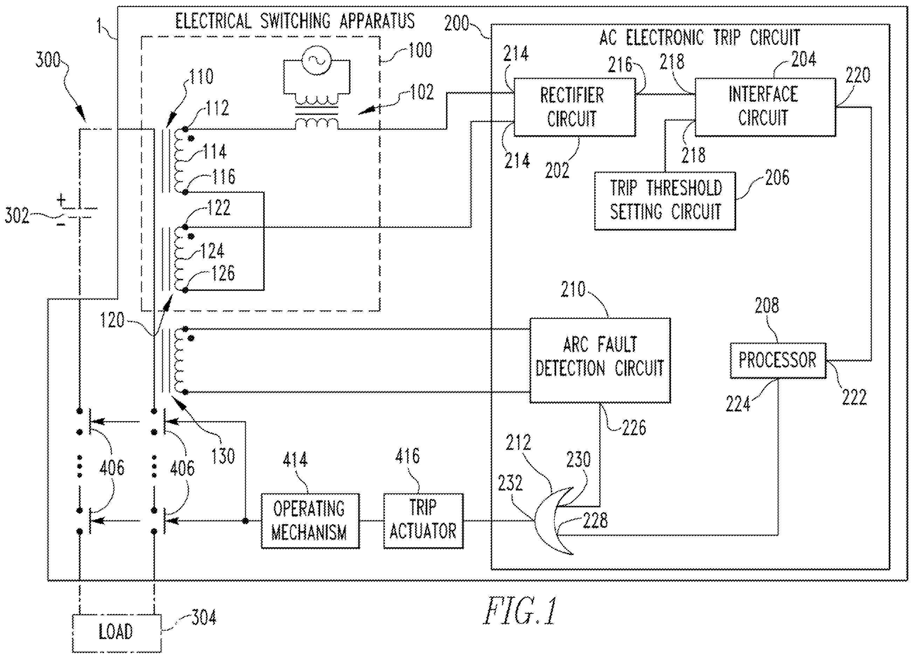

Figure 1 is a circuit diagram of an electrical switching apparatus 1 which can be, for example and without limitation, a circuit breaker. The electrical switching apparatus 1 is electrically connected to a protected circuit 300 (shown in phantom line drawing). The protected circuit 300 includes a DC power source 302 and a potentially ungrounded DC load 304. The electrical switching apparatus 1 includes one or more pairs of separable contacts 406. The electrical switching apparatus 1 also includes an operating mechanism 414 that opens and closes the one or more pairs of separable contacts 406 and a trip actuator 416 that cooperates with the operating mechanism 414 to trip open the one or more pairs of separable contacts 406.

The electrical switching apparatus 1 further includes a transductor circuit 100 and an AC electronic trip circuit 200. The transductor circuit 100 is inductively coupled with the protected circuit 300. The transductor circuit 100 outputs an AC current to the AC electronic trip circuit 200. The AC current output by the transductor circuit 100 is proportional to the DC current flowing in the protected circuit 300 and can be used to determine a level of the DC current in the protected circuit 300.

The transductor circuit 100 includes a first current transformer 110 and a second current transformer 120. The first and second current transformers 110,120 include respective secondary windings 114 and 124 which are inductively coupled with the protected circuit 300. The first and second current transformers 110,120 are electrically connected in series opposition with each other such that an electromotive force induced in the first current transformer 110 by the DC current in the protected circuit 300 is opposed to an electromotive force induced in the second current transformer 120 by the DC current in the protected circuit 300. By the cancellation of the electromotive forces, this arrangement electrically neutralizes the transformer effect. The transductor circuit 100 can also be designed in a fashion that it magnetically neutralizes the transformer effect.

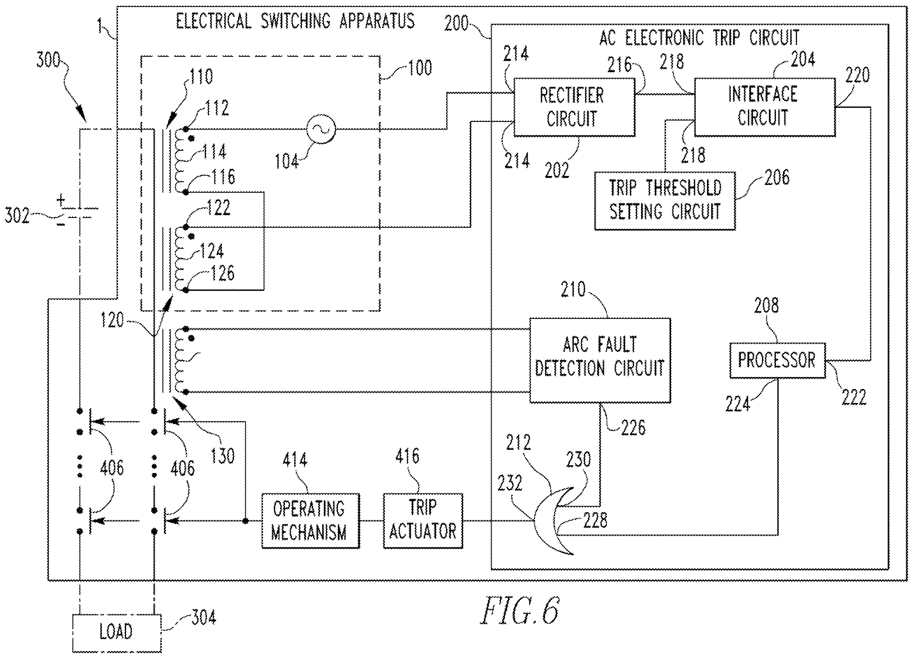

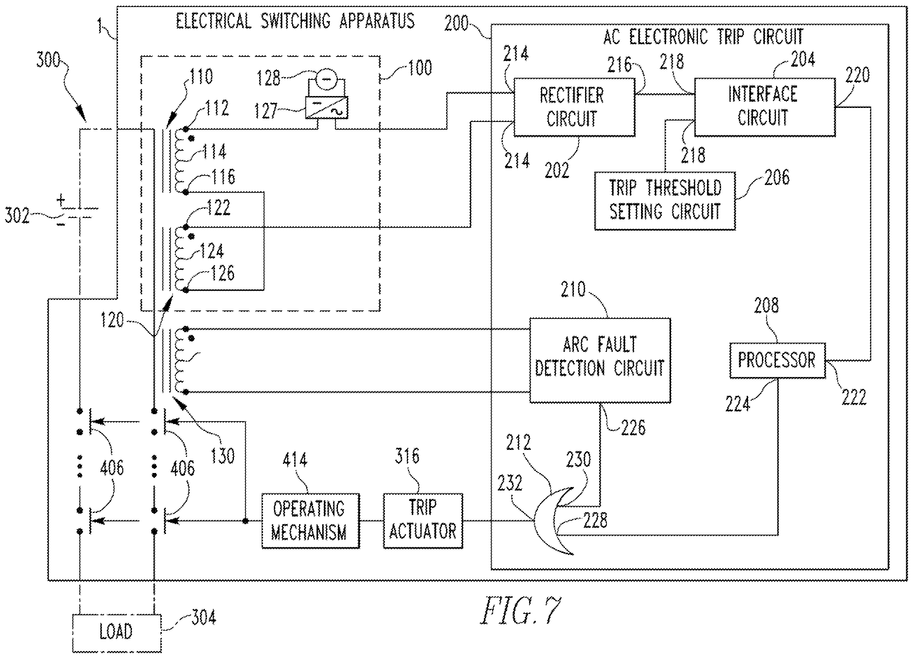

The transductor circuit 100 also includes a power source which provides an AC voltage to the secondary windings of the current transformers 110, 120. In the example shown in Figure 1, the power source includes an AC power source 104 and a transformer 102 to isolate the AC power source 104 from the current transformers 110, 120. Arranging the current transformers 110, 120 in series opposition with each other and providing the AC power source 104 causes the transductor circuit 100 to output an AC current which is proportional to the DC current in the protected circuit 300. It is contemplated that any suitable power source may be employed to provide the AC voltage to the secondary windings of the current transformers 110, 120. For example, in one non-limiting example embodiment shown in Figure 6, the transformer 102 is omitted from the power source and the AC power source 104 is electrically connected to the secondary winding of the first current transformer 110. In another non-limiting example embodiment shown in Figure 7, a DC/AC inverter 127 is electrically connected to the secondary winding of the first AC current transformer 110 and converts a DC voltage generated by a second DC power source 128 into the AC voltage.

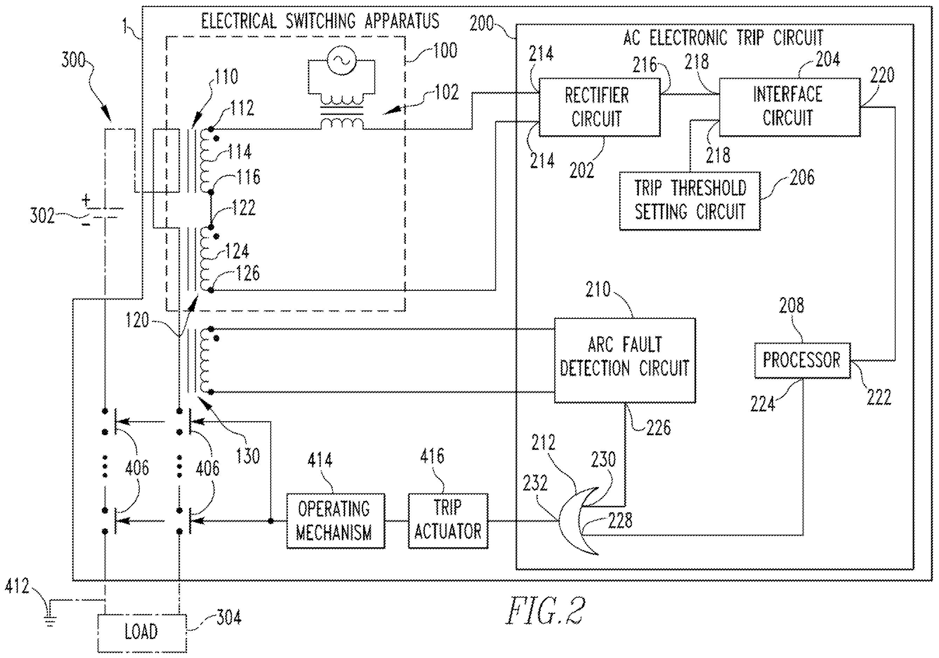

Continuing to refer to the example of Figure 1, the secondary windings 114 and 124 of the current transformers 110. 120 have first ends 112 and 122 and second ends 116 and 126, respectively. The first end 112 of the first current transformer 110 is electrically connected to the third transformer 102. The second end 116 of the first current transformer 110 is electrically connected to the second end 126 of the second current transformer 120. The first end 122 of the second current transformer 120 is electrically connected to the AC electronic trip circuit 200. In the example shown in Figure 2. the electrical connection between the first current transformer 110 and the second transformer 120 is changed such that the second end 116 of the first current transformer 110 is electrically connected to the first end 122 of the second current transformer 120, and the second end 126 of the second current transformer 120 is electrically connected to the AC electronic trip circuit 200. However, in both of the examples of Figures 1 and 2, the first current transformer 110 and the second current transformer 120 are electrically connected in series opposition with each other with respect to the electromotive forces induced by the DC current in the protected circuit 300.

The electrical switching apparatus 1 also includes a current sensor such as the example third current transformer 130 as shown in Figures 1 and 2. The third current transformer 130 is inductively coupled to the protected circuit 300. The third current transformer 130 is configured to sense an AC component (e.g., without limitation, broadband noise) of the DC current flow ing through the protected circuit 300 and to output it to the AC electronic trip circuit 200. The AC component of the DC current flowing through the protected circuit 300 can be used to detect an arc fault in the protected circuit 300.

The AC electronic trip circuit 200 is electrically connected to the transductor circuit 100 and receives the AC current output by the transductor circuit 100. The AC electronic trip circuit 200 is also electrically connected to the third transformer 130 and receives the sensed AC component of the DC current flowing through the protected circuit 300 from the third transformer 130. The AC electronic trip circuit 200 includes a rectifier circuit 202, an interface circuit 204. a trip threshold setting circuit 206. a processor 208, an arc fault detection circuit 210, and an output interface circuit 212.

The rectifier circuit 202 includes a rectifier circuit input 214 and a rectifier circuit output 216. The rectifier circuit input 214 is electrically connected to the transductor circuit 100 and is structured to receive the AC current output from the transductor circuit 100. The rectifier circuit 202 includes a full-wave rectifier and is structured to rectify the AC current. The rectifier circuit 202 outputs the rectified AC current to the rectifier circuit output 216. Although a full-wave rectifier is disclosed, it is contemplated that other suitable types of rectifiers may be employed such as, without limitation, a half-wave rectifier, with appropriate modifications to other components to support the change.

The interface circuit 204 includes an interface circuit input 218 and an interface circuit output 220. The interface circuit input 218 is electrically connected to the rectifier circuit output 216 and is structured to receive the rectified AC current. The interface circuit input 218 is also electrically connected to the trip threshold setting circuit 206. The trip threshold setting circuit 206 is structured to set a an override threshold at which the processor 222 outputs a trip control signal to cause the trip actuator 416 to control the operating mechanism 414 to trip open the separable contacts 406 instantaneously. The interface circuit output 220 is electrically connected to a processor input 222 of the processor 208.

The processor 208 is structured to monitor the processor input 222 and to determine whether a trip condition (e.g.. without limitation, an over current condition) exists. The processor includes a processor output 224 that is electrically connected to a first input 228 of the output interface circuit 212. When the processor 208 determines that a trip condition exists, it outputs the trip control signal to the first input 228 of the output interface circuit 212.

The arc fault detection circuit 210 is electrically connected to the third transformer 130 and receives the sensed AC component of the DC current flowing through the protected circuit 300 from the third transformer 130. The arc fault detection circuit 210 also includes an output 226 electrically connected to the second input 230 of the output interface circuit 212. The arc fault detection circuit 210 uses the sensed AC component to detect whether an arc fault exists in the protected circuit 300. When the arc fault detection circuit 210 detects an arc fault in the protected circuit 300. it outputs an arc fault control signal at the output 226.

The output interface circuit 212 includes the first and second inputs 228-230 and an output 232. The first and second inputs 228,230 are electrically connected to processor output 224 and arc fault detection circuit output 226, respectively. The output 232 is electrically connected to the trip actuator 416. The example output interface circuit 212 is an "or" logic circuit that outputs a control signal to the trip actuator 416 to cause the trip actuator 416 to cooperate with the operating mechanism 414 to trip open the separable contacts 406 when either the trip control signal is received at the first input 228 or the arc fault control signal is received at the second input 230.

Referring to Figure 2, an example of a different configuration of the electrical switching apparatus 1 is shown. In Figure 2, the electrical switching apparatus 1 has a configuration that is generally suitable for a potentially grounded load where the DC load 304 is electrically connected to a ground 412.

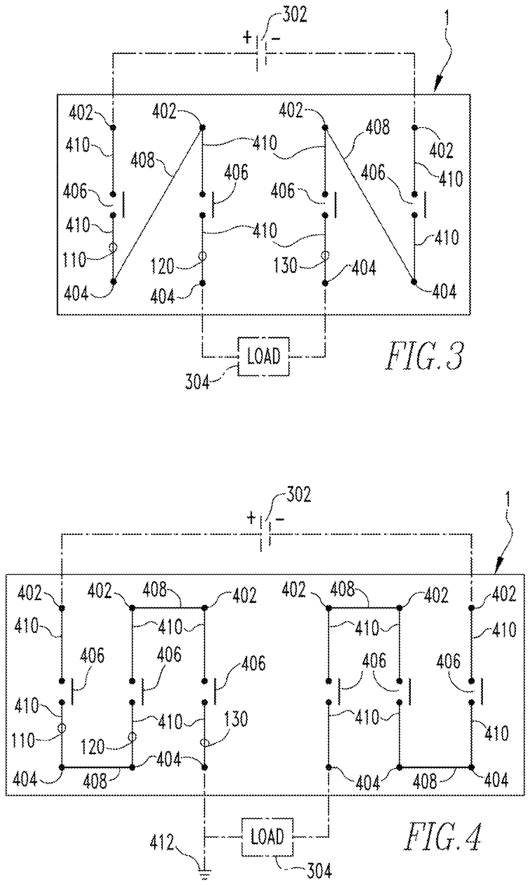

Referring to Figures 3 and 4. examples of different configurations of a conductive path through the electrical switching apparatus 1 are shown. Figure 3 shows the conductive path in the electrical switching apparatus 1 configured for a potentially ungrounded DC load 304 and Figure 4 shows the conductive path in the electrical switching apparatus configured for a potentially grounded DC load 304. The conductive path includes first terminals 402, second terminals 404. pairs of separable contacts 406. jumpers 408, and conductors 410. Two of the first terminals 402 are input terminals which are configured to electrically connect to the DC power source 302. Two of the second terminals 404 are output terminals which are structured to electrically connect to the DC load 304. The first terminals 402, second terminals 404. pairs of separable contacts 406. jumpers 408. and conductors 410 are electrically connected in series to complete a power circuit between DC power source 302 and DC load 304.

The first, second, and third current transformers 110,120,130 are inductively coupled to at least one of the conductors 410. While Figures 3 and 4 show two example placements of the first, second, and third current transformers 110,120,130, the disclosed concept is not limited to those example placements. The first, second, and third current transformers 110,120,130 may be placed at any suitable location in the protected circuit order to inductively couple to any of the conductors 410.

In the example shown in Figure 3. the jumpers 408 are each electrically connected between one of the first terminals 402 and one of the second terminals 404. In the example shown in Figure 4, the jumpers 408 are each electrically connected between two of the first terminals 402 or two of the second terminals 404.

The change in configuration of the jumpers 408 between the examples shown in Figures 3 and 4 changes the direction of the electromotive force induced in one of the first and second current transformers 110, 120. As such, when the configuration of the jumpers 408 is changed between the example shown in Figure 3 and the example shown in Figure 4, the electrical connection between the first current transformer 110 and the second current transformer 120 is also preferably changed to keep the first current transformer 110 and the second current transformer 120 electrically connected in series opposition in order to neutralize the transformer effect. The configuration of the electrical switching apparatus 1 shown in Figure 1 corresponds to the configuration of the conductive path shown in Figure 3 and the configuration of the electrical switching apparatus 1 shown in Figure 2 corresponds to the configuration of the conductive path shown in Figure 4. The electrical connection between the first and second current transformers 110,120 changes between the configurations of Figures 1 and 2 to keep the first and second current transformers 110,120 electrically connected in series opposition when the configuration of the conductive path changes between the configurations of Figures 3 and 4. respectively.

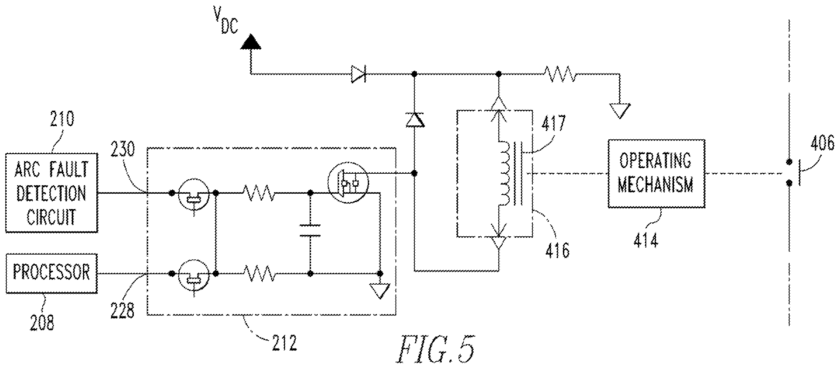

Referring to Figure 5, example circuit components of the output interface circuit 212 are shown. While one configuration of circuit components for the output interface circuit 212 is shown, it is contemplated that any suitable configuration may be employed without departing from the scope of the disclosed concept.

Continuing to refer to Figure 5, the trip actuator 416 includes a trip coil 417 which cooperates with the operating mechanism 414. The trip coil 417 is energized by a DC voltage V_{DC}. The DC voltage V_{DC} may be provided by any suitable power source (e.g., without limitation, a power supply included in the electrical switching apparatus).

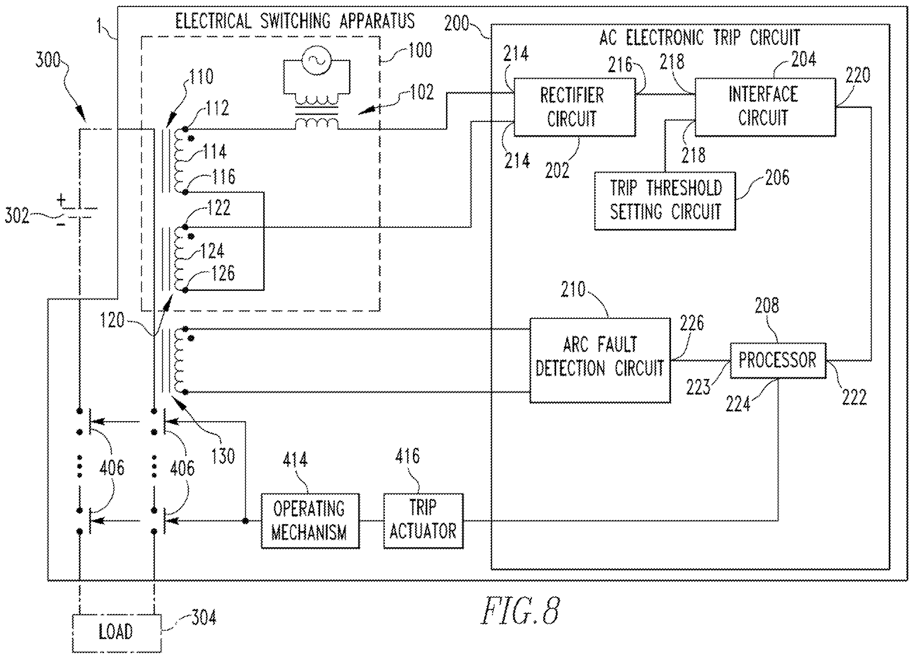

Referring to Figure 8. an example of a different configuration of the electrical switching apparatus 1 is shown. In the electrical switching apparatus 1 of Figure 8, the arc fault detection circuit output 226 is electrically connected to a second processor input 223. In this configuration of the electrical switching apparatus 1, arc fault detection circuit 210 uses processor 208 to assist with detecting an arc fault. As such, processor 208 can output both the trip control signal and the arc fault control signal to the processor output 224. As such, output interface circuit 212 (see Figure 1) may be omitted from the electrical switching apparatus 1 of Figure 8.

Although separable contacts 406 are disclosed, suitable solid state separable contacts can be employed. For example, the disclosed electrical switching apparatus 1 includes a suitable circuit interrupter mechanism, such as the separable contacts 406 that are opened and closed by the disclosed operating mechanism 414, although the disclosed concept is applicable to a wide range of circuit interruption mechanisms (e.g., without limitation, solid state switches like FET or IGBT devices; contactor contacts) and/or solid state based control/protection devices (e.g., without limitation, drives; soft-starters; DC/DC converters) and/or operating mechanisms (e.g., without limitation, electrical, electro-mechanical, or mechanical mechanisms).

## Claims

1. An electrical switching apparatus (1) comprising:
a plurality of first terminals (402) including two input terminals structured to electrically connect to a direct current power source (302);
a plurality of second terminals (404) including two output terminals structured to electrically connect to a direct current load (304);
a plurality of pairs of separable contacts (406);
an operating mechanism (414) configured to open and close said separable contacts;
a trip actuator (416) configured to cooperate with said operating mechanism to trip open said separable contacts;
a pluralityof conductors (410) that electrically connect each pair of separable contacts between one of said first terminals and one of said second terminals; **characterised by** a transductor circuit (100) including first and second current transformers (110,120), the transductor circuit being configured to sense a direct current component of a current flowing between at least one of the input terminals and at least one of the output terminals and to output an alternating current proportional to the direct current component;
a current sensor (130) configured to sense an alternating current component of the current flowing between at least one of the input terminals and at least one of the output terminals; and
an alternating current electronic trip circuit (200) including an arc fault detection circuit (210) configured to detect an arc fault based on the sensed alternating current component, the alternating current electronic trip circuit being configured to control said trip actuator based on the alternating current output from the transductor circuit or the detected arc fault.

2. The electrical switching apparatus (1) of claim 1, wherein the alternating current electronic trip circuit further includes:
a rectifier circuit (202) having a rectifier circuit input (214) and a rectifier circuit output (216), the rectifier circuit input being electrically connected to the transductor circuit;
an interface circuit (204) having an interface circuit input (218) and an interface circuit output (220), the interface circuit input being electrically connected to the rectifier circuit output; and
a processor (208) having a processor input (222) electrically connected to the interface circuit output, the processor being structured to output a trip control signal based on the alternating current output from the transductor circuit.

3. The electrical switching apparatus (1) of claim 2, wherein the rectifier circuit includes a full-wave rectifier.

4. The electrical switching apparatus (1) of claim 2, wherein the alternating current electronic trip circuit further includes a trip threshold setting circuit (206) structured to set an override threshold at which the processor controls the separable contacts to trip open instantaneously.

5. The electrical switching apparatus (1) of claim 2, wherein the arc fault detection circuit is configured to output an arc fault control signal when an arc fault is detected.

6. The electrical switching apparatus (1) of claim 5, wherein the alternating current electronic trip circuit further includes an output interface circuit (212) having a first input (228) electrically connected to the processor and a second input (230) electrically connected to the arc fault detection circuit; wherein the output interface circuit is configured to control said trip actuator to cooperate with said operating mechanism to trip open said separable contacts when the trip control signal is received at the first input or the arc fault control signal is received at the second input.

7. The electrical switching apparatus (1) of claim 1, wherein the plurality of conductors include a first conductor and a second conductor, wherein the first current transformer has a secondary winding (114) inductively coupled with the first conductor and the second current transformer has a secondary winding (124) inductively coupled with the second conductor; wherein the transductor circuit includes an alternating current power circuit (102,104;127,128) configured to provide an alternating voltage to the first current transformer and the second current transformer; and wherein the secondary windings of the first current transformer and the second current transformer are electrically connected in series-opposition such that an electromotive force induced in the secondary winding of the first current transformer by the direct current is in opposition with an electromotive force induced in the secondary winding of the second current transformer by the direct current.

8. The electrical switching apparatus (1) of claim 7, wherein the alternating current power circuit includes an alternating current power source (104) and a fourth transformer (102); and wherein the alternating current power source is configured to provide the alternating voltage to the first current transformer and the second current transformer via the fourth transformer.

9. The electrical switching apparatus (1) of claim 7, wherein the alternating current power circuit includes a direct current/alternating current inverter (127) and a second direct current power source (128); and wherein the direct current/alternating current inverter converts a direct current voltage generated by the second direct current power source into said alternating voltage.

10. The electrical switching apparatus (1) of claim 8, wherein the secondary windings of each of the first current transformer and the second transformer include a first end (112,122) and a second end (116,126); wherein the first end of the first current transformer is electrically connected to the fourth transformer; wherein the second end of the first transformer is electrically connected to the second end of the second transformer; and wherein the first end of the second transformer is electrically connected to the alternating current electronic trip unit.

11. The electrical switching apparatus (1) of claim 10, wherein the direct current load is ungrounded.

12. The electrical switching apparatus of claim 8, wherein the secondary windings of each of the first current transformer and the second transformer include a first end (112,122) and a second end (116,126); wherein the first end of the first current transformer is electrically connected to the fourth transformer; wherein the second end of the first transformer is electrically connected to the first end of the second transformer; and wherein the second end of the second transformer is electrically connected to the alternating current electronic trip unit.

13. The electrical switching apparatus (1) of claim 12, where the direct current load is grounded.

14. The electrical switching apparatus (1) of claim 1, wherein the current sensor is a third current transformer.

15. The electrical switching apparatus (1) of claim 1, wherein the alternating current electronic trip circuit further includes:
a rectifier circuit (216) having a rectifier circuit input (214) and a rectifier circuit output (216), the rectifier circuit input being electrically connected to the transductor circuit;
an interface circuit (204) having an interface circuit input (218) and an interface circuit output (220), the interface circuit input being electrically connected to the rectifier circuit output; and
a processor (208) having a first processor input (222) electrically connected to the interface circuit output, a second processor input (223) electrically connected to the arc fault detection circuit, and a processor output (224) electrically connected to the trip actuator,
wherein the arc fault detection circuit is structured to use the processor to assist with detecting the arc fault, and wherein the processor is structured to output a trip control signal at the processor output based on the alternating current output from the transductor circuit and to output an are fault control signal at the processor output when an arc fault is detected.

## Patentansprüche

1. Eine elektrische Schaltvorrichtung (1), die Folgendes aufweist:
eine Vielzahl von ersten Anschlüssen (402), die zwei Eingangsanschlüsse aufweisen, die ausgelegt sind zum elektrischen Verbinden mit einer Gleichstromleistungsquelle (302);
eine Vielzahl von zweiten Anschlüssen (404), die zwei Ausgangsanschlüsse aufweisen, die ausgelegt sind zum elektrischen Verbinden mit einem Gleichstromverbraucher bzw. einer Gleichstromlast (304);
eine Vielzahl von Paaren von trennbaren Kontakten (406);
einen Betätigungsmechanismus (414), der konfiguriert ist zum Öffnen und Schließen der trennbaren Kontakte;
ein Auslösebetätigungselement (416), das konfiguriert ist, um mit dem Betätigungsmechanismus zum Auslösen einer Öffnung der trennbaren Kontakte zusammenzuwirken;
eine Vielzahl von Leitern (410), die elektrisch jedes Paar von trennbaren Kontakten zwischen einem der ersten Anschlüsse und einem der zweiten Anschlüsse verbinden;
**gekennzeichnet durch**
eine Transduktorschaltung (100), die erste und zweite Stromtransformatoren (110, 120) aufweist, wobei die Transduktorschaltung konfiguriert ist zum Abfühlen einer Gleichstromkomponente eines Stroms, der zwischen wenigstens einem der Eingangsanschlüsse und wenigstens einem der Ausgangsanschlüsse fließt und zum Ausgeben eines Wechselstroms, der zu der Gleichstromkomponente proportional ist;
einen Stromsensor (130), der konfiguriert ist zum Abfühlen einer Wechselstromkomponente des Stroms, der zwischen wenigstens einem der Eingangsanschlüsse und wenigstens einem der Ausgangsanschlüsse fließt; und eine elektronische Wechselstromauslöseschaltung (200), die eine Lichtbogenfehlerdetektionsschaltung (210) aufweist, die konfiguriert ist zum Detektieren eines Lichtbogenfehlers basierend auf der abgefühlten Wechselstromkomponente, wobei die elektronische Wechselstromauslöseschaltung konfiguriert ist zum Steuern des Auslösebetätigungselements basierend auf der Wechselstromausgabe von der Transduktorschaltung oder dem detektierten Lichtbogenfehler.

2. Elektrische Schaltvorrichtung (1) nach Anspruch 1, wobei die elektronische Wechselstromauslöseschaltung weiter Folgendes aufweist:
eine Gleichrichterschaltung (202) mit einem Gleichrichterschaltungseingang (214) und einem Gleichrichterschaltungsausgang (216), wobei der Gleichrichterschaltungseingang elektrisch mit der Transduktorschaltung verbunden ist;
eine Schnittstellenschaltung (204) mit einem Schnittstellenschaltungseingang (218) und einem Schnittstellenschaltungsausgang (220), wobei der Schnittstellenschaltungseingang elektrisch mit dem Gleichrichterschaltungsausgang verbunden ist; und
einen Prozessor (208) mit einem Prozessoreingang (222), der elektrisch mit dem Schnittstellenschaltungsausgang verbunden ist, wobei der Prozessor ausgelegt ist zum Ausgeben eines Auslösesteuersignals basierend auf der Wechselstromausgabe von der Transduktorschaltung.

3. Elektrische Schaltvorrichtung (1) nach Anspruch 2, wobei die Gleichrichterschaltung einen Zweiweg- bzw. Vollwellengleichrichter aufweist.

4. Elektrische Schaltvorrichtung (1) nach Anspruch 2, wobei die elektronische Wechselstromauslöseschaltung weiter eine Auslöseschwellenwerteinstellschaltung (206) aufweist, die ausgelegt ist zum Einstellen eines Override-Schwellenwertes bzw. Übersteuerungsschwellenwertes, bei dem der Prozessor die trennbaren Kontakte steuert, so dass sie unmittelbar in die offene Position ausgelöst werden.

5. Elektrische Schaltvorrichtung (1) nach Anspruch 2, wobei die Lichtbogenfehlerdetektionsschaltung konfiguriert ist zum Ausgeben eines Lichtbogenfehlersteuersignals, wenn ein Lichtbogenfehler detektiert wird.

6. Elektrische Schaltvorrichtung (1) nach Anspruch 5, wobei die elektronische Wechselstromauslöseschaltung weiter eine Ausgabeschnittstellenschaltung (212) mit einem ersten Eingang (228), der elektrisch mit dem Prozessor verbunden ist, und einem zweiten Eingang (230), der elektrisch mit der Lichtbogenfehlerdetektionsschaltung verbunden ist, aufweist; wobei die Ausgabeschnittstellenschaltung konfiguriert ist zum Steuern des Auslösebetätigungselement, so dass es mit dem Betätigungsmechanismus zusammenwirkt zum Auslösen der trennbaren Kontakte in die offene Position, wenn das Auslösesteuersignal an dem ersten Eingang empfangen wird oder das Lichtbogenfehlersteuersignal an dem zweiten Eingang empfangen wird.

7. Elektrische Schaltvorrichtung (1) nach Anspruch 1, wobei die Vielzahl von Leitern einen ersten Leiter und einen zweiten Leiter aufweist; wobei der erste Stromtransformator eine sekundäre Wicklung (114) hat, die induktiv mit dem ersten Leiter gekoppelt ist und der zweite Stromtransformator eine sekundäre Wicklung (124) hat, die induktiv mit dem zweiten Leiter gekoppelt ist; wobei die Transduktorschaltung eine Wechselstromleistungsschaltung (102, 104; 127, 128) aufweist, die konfiguriert ist zum Vorsehen einer Wechselspannung an den ersten Stromtransformator und den zweiten Stromtransformator; und wobei die sekundären Wicklungen des ersten Stromtransformators und des zweiten Stromtransformators elektrisch gegenphasig bzw. entgegengesetzt in Reihe verbunden sind, so dass eine elektromotorische Kraft, die in der sekundären Wicklung des ersten Stromtransformators durch den Gleichstrom induziert wird entgegengesetzt ist zu einer elektromotorischen Kraft, die in der zweiten Wicklung des zweiten Stromtransformators durch den Gleichstrom induziert wird.

8. Elektrische Schaltvorrichtung (1) nach Anspruch 7, wobei die Wechselstromleistungsschaltung eine Wechselstromleistungsquelle (104) und einen vierten Transformator (102) aufweist; und wobei die Wechselstromleistungsquelle konfiguriert ist zum Vorsehen der Wechselspannung an den ersten Stromtransformator und den zweiten Stromtransformator über den vierten Transformator.

9. Elektrische Schaltvorrichtung (1) nach Anspruch 7, wobei die Wechselstromleistungsschaltung einen Gleichstrom/Wechselstrom-Invertierer (127) und eine zweite Gleichstromleistungsquelle (128) aufweist; und wobei der Gleichstrom/Wechselstrom-Invertierer eine Gleichspannung, die durch die zweite Gleichstromleistungsquelle generiert wird, in die Wechselspannung konvertiert.

10. Elektrische Schaltvorrichtung (1) nach Anspruch 8, wobei die sekundären Wicklungen von jedem von dem ersten Stromtransformator und dem zweiten Stromtransformator ein erstes Ende (112, 122) und ein zweites Ende (116, 126) aufweisen; wobei das erste Ende des ersten Stromtransformators elektrisch mit dem vierten Transformator verbunden ist; wobei das zweite Ende des ersten Transformators elektrisch mit dem zweiten Ende des zweiten Transformators verbunden ist; und wobei das erste Ende des zweiten Transformators elektrisch mit der elektronischen Wechselstromauslöseeinheit verbunden ist.

11. Elektrische Schaltvorrichtung (1) nach Anspruch 10, wobei die Gleichstromlast nicht geerdet ist.

12. Elektrische Schaltvorrichtung nach Anspruch 8, wobei die sekundären Wicklungen von jedem von dem ersten Stromtransformator und dem zweiten Stromtransformator ein erstes Ende (112, 122) und ein zweites Ende (116, 126) aufweisen; wobei das erste Ende des ersten Stromtransformators elektrisch mit dem vierten Transformator verbunden ist; wobei das zweite Ende des ersten Transformators elektrisch mit dem ersten Ende des zweiten Transformators verbunden ist; und wobei das zweite Ende des zweiten Transformators elektrisch mit der elektronischen Wechselstromauslöseeinheit verbunden ist.

13. Elektrische Schaltvorrichtung (1) nach Anspruch 12, wobei die Gleichstromlast geerdet ist.

14. Elektrische Schaltvorrichtung (1) nach Anspruch 1, wobei der Stromsensor ein dritter Stromtransformator ist.

15. Elektrische Schaltvorrichtung (1) nach Anspruch 1, wobei die elektronische Wechselstromauslöseschaltung weiter Folgendes aufweist:
eine Gleichrichterschaltung (216) mit einem Gleichrichterschaltungseingang (214) und einem Gleichrichterschaltungsausgang (216), wobei der Gleichrichterschaltungseingang elektrisch mit der Transduktorschaltung verbunden ist;
eine Schnittstellenschaltung (204) mit einem Schnittstellenschaltungseingang (218) und einem Schnittstellenschaltungsausgang (220), wobei der Schnittstellenschaltungseingang elektrisch mit dem Gleichrichterschaltungsausgang verbunden ist; und
einen Prozessor (208) mit einem ersten Prozessoreingang (222), der elektrisch mit dem Schnittstellenschaltungsausgang verbunden ist, einem zweiten Prozessoreingang (223), der elektrisch mit der Lichtbogenfehlerdetektionsschaltung verbunden ist, und einem Prozessorausgang (224), der elektrisch mit dem Auslösebetätigungselement verbunden ist,
wobei die Lichtbogenfehlerdetektionsschaltung ausgelegt ist zum Verwenden des Prozessors zum Unterstützen beim Detektieren des Lichtbogenfehlers, und wobei der Prozessor ausgelegt ist zum Ausgeben eines Auslösesteuersignals an dem Prozessorausgang basierend auf der Wechselstromausgabe von der Transduktorschaltung und zum Ausgeben eines Lichtbogenfehlersteuersignals an dem Prozessorausgang, wenn ein Lichtbogenfehler detektiert wird.

## Revendications

1. Appareil de commutation électrique (1) comprenant :
une pluralité de premières bornes (402) comprenant deux bornes d'entrée agencées pour se connecter électriquement à une source d'alimentation en courant continu (302) ;
une pluralité de deuxièmes bornes (404) comprenant deux bornes de sortie agencées pour se connecter électriquement à une charge en courant continu (304) ;
une pluralité de paires de contacts séparables (406) ;
un mécanisme d'actionnement (414) agencé pour ouvrir et fermer les contacts séparables ;
un actionneur de déclenchement (416) agencé pour coopérer avec le mécanisme d'actionnement pour déclencher l'ouverture des contacts séparables ;
une pluralité de conducteurs (410) qui connectent électriquement chaque paire de contacts séparables entre l'une des premières bornes et l'une des deuxièmes bornes ;
**caractérisé par**
un circuit transducteur (100) comprenant des premier et deuxième transformateurs de courant (110, 120), le circuit transducteur étant agencé pour détecter une composante en courant continu d'un courant circulant entre au moins l'une des bornes d'entrée et au moins l'une des bornes de sortie et pour fournir un courant alternatif proportionnel à la composante en courant continu ;
un capteur de courant (130) agencé pour détecter une composante en courant alternatif du courant circulant entre au moins l'une des bornes d'entrée et au moins l'une des bornes de sortie ; et
un circuit de déclenchement électronique en courant alternatif (200) comprenant un circuit de détection de défaut d'arc (210) agencé pour détecter un défaut d'arc sur la base de la composante en courant alternatif détectée, le circuit de déclenchement électronique en courant alternatif étant agencé pour contrôler l'actionneur de déclenchement sur la base de la sortie en courant alternatif provenant du circuit transducteur ou du défaut d'arc détecté.

2. Dispositif de commutation électrique (1) selon la revendication 1, dans lequel le circuit de déclenchement électronique en courant alternatif comprend en outre :
un circuit redresseur (202) comportant une entrée de circuit redresseur (214) et une sortie de circuit redresseur (216), l'entrée de circuit redresseur étant connectée électriquement au circuit transducteur ;
un circuit d'interface (204) comportant une entrée de circuit d'interface (218) et une sortie de circuit d'interface (220), l'entrée de circuit d'interface étant connectée électriquement à la sortie de circuit redresseur ; et
un processeur (208) comportant une entrée de processeur (222) connectée électriquement à la sortie de circuit d'interface, le processeur étant agencé pour fournir un signal de commande de déclenchement sur la base de la sortie en courant alternatif provenant du circuit transducteur.

3. Dispositif de commutation électrique (1) selon la revendication 2, dans lequel le circuit redresseur comprend un redresseur à double alternance.

4. Dispositif de commutation électrique (1) selon la revendication 2, dans lequel le circuit de déclenchement électronique en courant alternatif comprend en outre un circuit de réglage de seuil de déclenchement (206) agencé pour régler un seuil d'intervention auquel le processeur commande les contacts séparables pour déclencher l'ouverture instantanément.

5. Dispositif de commutation électrique (1) selon la revendication 2, dans lequel le circuit de détection de défaut d'arc est agencé pour produire un signal de contrôle de défaut d'arc lorsqu'un défaut d'arc est détecté.

6. Dispositif de commutation électrique (1) selon la revendication 5, dans lequel le circuit de déclenchement électronique en courant alternatif comprend en outre un circuit d'interface de sortie (212) comportant une première entrée (228) connectée électriquement au processeur, et une deuxième entrée (230) connectée électriquement au circuit de détection de défaut d'arc ; dans lequel le circuit d'interface de sortie est agencé commander l'actionneur de déclenchement pour coopérer avec le mécanisme d'actionnement pour déclencher l'ouverture des contacts séparables lorsque le signal de commande de déclenchement est reçu au niveau de la première entrée ou le signal de contrôle de défaut d'arc est reçu au niveau de la deuxième entrée.

7. Dispositif de commutation électrique (1) selon la revendication 1, dans lequel la pluralité de conducteurs comprend un premier conducteur et un deuxième conducteur ; dans lequel le premier transformateur de courant comporte un enroulement secondaire (114) couplé de façon inductive au premier conducteur, et le deuxième transformateur de courant comporte un enroulement secondaire (124) couplé de façon inductive au deuxième conducteur ; dans lequel le circuit transducteur comprend un circuit d'alimentation en courant alternatif (102, 104 ; 127, 128) agencé pour fournir une tension alternative au premier transformateur de courant et au deuxième transformateur de courant ; et dans lequel les enroulements secondaires du premier transformateur de courant et du deuxième transformateur de courant sont connectés électriquement en opposition série de sorte qu'une force électromotrice induite dans l'enroulement secondaire du premier transformateur de courant par le courant continu est en opposition avec une force électromotrice induite dans l'enroulement secondaire du deuxième transformateur de courant par le courant continu.

8. Dispositif de commutation électrique (1) selon la revendication 7, dans lequel le circuit d'alimentation en courant alternatif comprend une source d'alimentation en courant alternatif (104) et un quatrième transformateur (102) ; et dans lequel la source d'alimentation en courant alternatif est agencée pour fournir la tension alternative au premier transformateur de courant et au deuxième transformateur de courant par l'intermédiaire du quatrième transformateur.

9. Dispositif de commutation électrique (1) selon la revendication 7, dans lequel le circuit d'alimentation en courant alternatif comprend un onduleur courant continu/courant alternatif (127) et une deuxième source d'alimentation en courant continu (128) ; et dans lequel l'onduleur courant continu/courant alternatif convertit une tension en courant continu générée par la deuxième source d'alimentation en courant continu en ladite tension alternative.

10. Dispositif de commutation électrique (1) selon la revendication 8, dans lequel les enroulements secondaires de chacun du premier transformateur de courant et du deuxième transformateur de courant comprennent une première extrémité (112, 122) et une deuxième extrémité (116, 126) ; dans lequel la première extrémité du premier transformateur de courant est connectée électriquement au quatrième transformateur ; dans lequel la deuxième extrémité du premier transformateur est connectée électriquement à la deuxième extrémité du deuxième transformateur ; et dans lequel la première extrémité du deuxième transformateur est connectée électriquement au module de déclenchement électronique en courant alternatif.

11. Dispositif de commutation électrique (1) selon la revendication 10, dans lequel la charge en courant continu n'est pas reliée à la masse.

12. Dispositif de commutation électrique selon la revendication 8, dans lequel les enroulements secondaires de chacun du premier transformateur de courant et du deuxième transformateur de courant comprennent une première extrémité (112, 122) et une deuxième extrémité (116, 126) ; dans lequel la première extrémité du premier transformateur de courant est connectée électriquement au quatrième transformateur ; dans lequel la deuxième extrémité du premier transformateur est connectée électriquement à la première extrémité du deuxième transformateur ; et dans lequel la deuxième extrémité du deuxième transformateur est connectée électriquement au module de déclenchement électronique en courant alternatif.

13. Dispositif de commutation électrique (1) selon la revendication 12, dans lequel la charge en courant continu est reliée à la masse.

14. Dispositif de commutation électrique (1) selon la revendication 1, dans lequel le capteur de courant est un troisième transformateur de courant.

15. Dispositif de commutation électrique (1) selon la revendication 1, dans lequel le circuit de déclenchement électronique en courant alternatif comprend en outre :
un circuit redresseur (216) comportant une entrée de circuit redresseur (214) et une sortie de circuit redresseur (216), l'entrée de circuit redresseur étant connectée électriquement au circuit transducteur ;
un circuit d'interface (204) comportant une entrée de circuit d'interface (218) et une sortie de circuit d'interface (220), l'entrée de circuit d'interface étant connectée électriquement à la sortie de circuit redresseur ; et
un processeur (208) comportant une première entrée de processeur (222) connectée électriquement à la sortie de circuit d'interface, une deuxième entrée de processeur (223) connectée électriquement au circuit de détection de défaut d'arc, et une sortie de processeur (224) connectée électriquement à l'actionneur de déclenchement,
dans lequel le circuit de détection de défaut d'arc est agencé pour utiliser le processeur pour aider à la détection du défaut d'arc, et dans lequel le processeur est agencé pour fournir un signal de commande de déclenchement au niveau de la sortie de processeur sur la base de la sortie en courant alternatif provenant du circuit transducteur et à fournir un signal de contrôle de défaut d'arc au niveau de la sortie de processeur lorsqu'un défaut d'arc est détecté.
